(19) Europäisches Patentamt
European Patent Office
Office européen des brevets

(11) **EP 4 696 656 A1**

(12) **EUROPEAN PATENT APPLICATION**
published in accordance with Art. 153(4) EPC

(43) Date of publication:
**18.02.2026 Bulletin 2026/08**

(21) Application number: **23937327.7**

(22) Date of filing: **22.12.2023**

(51) International Patent Classification (IPC):
*C01G 53/00* (2025.01)      *H01M 4/525* (2010.01)
*H01M 4/505* (2010.01)      *H01M 4/485* (2010.01)
*H01M 10/0525* (2010.01)

(52) Cooperative Patent Classification (CPC):
Y02E 60/10

(86) International application number:
**PCT/CN2023/141005**

(87) International publication number:
**WO 2024/234656 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.05.2023 CN 202310567615**

(71) Applicant: **Sunwoda Mobility Energy Technology Co., Ltd.**
**Shenzhen, Guangdong 518107 (CN)**

(72) Inventors:
• XIE, Dong
  **Shenzhen, Guangdong 518107 (CN)**
• OUYANG, Yunpeng
  **Shenzhen, Guangdong 518107 (CN)**
• HU, Yi
  **Shenzhen, Guangdong 518107 (CN)**

(74) Representative: **Elzaburu S.L.P.**
**Edificio Torre de Cristal**
**Paseo de la Castellana 259 C, planta 28**
**28046 Madrid (ES)**

(54) **POSITIVE ELECTRODE ACTIVE MATERIAL, SECONDARY BATTERY, AND ELECTRIC DEVICE**

(57) A positive electrode active material, a secondary battery, and an electric device are disclosed. The positive electrode active material satisfies the following relationship: $300 \leq P*D/\Delta\theta \leq 800$; where P represents the porosity of the positive electrode active material, with a unit of %; D represents the crystal plane dimension of the (110) crystal plane of the positive electrode active material, with a unit of Å; and $\Delta\theta$ represents a splitting degree between a diffraction angle of the (110) crystal plane and that of (108) crystal plane of the positive electrode active material, with a unit of °.

FIG. 1

EP 4 696 656 A1

**Description**

**CROSS-REFERENCE TO RELATED APPLICATIONS**

The present disclosure claims the entire benefits of the invention patent application No. 202310567615.1, filed with the China National Intellectual Property Administration on May 18, 2023, and entitled with "POSITIVE ELECTRODE ACTIVE MATERIAL AND ITS SECONDARY BATTERY, AND ELECTRIC DEVICE", which is hereby incorporated by reference in its entirety.

**TECHNICAL FIELD**

The present disclosure generally relates to the field of new energy technology, and in particular to a positive electrode active material and its secondary battery, and an electric device.

**BACKGROUND**

With continuous development of technology, higher and more demands have been put forward for battery performance. Batteries are not only required to have high pulse power, but also high cycle stability. However, the pulse power and cycle performance of existing batteries cannot satisfy the needs of modern society. Since battery performance largely depends on electrode materials, it is crucial to develop an electrode material that combines high pulse power with long cycle performance.

**SUMMARY**

In a first aspect, the present disclosure relates to a positive electrode active material satisfying the following relationship:
$300 \leq P*D/\Delta\theta \leq 800$; where P represents a porosity of the positive electrode active material, D represents a crystal plane dimension of (110) crystal plane of the positive electrode active material, and $\Delta\theta$ represents a splitting degree between a diffraction angle of the (110) crystal plane and that of (108) crystal plane of the positive electrode active material.

In some embodiments, the porosity P of the positive electrode active material satisfies $30\% \leq P \leq 65\%$.

In some embodiments, the crystal plane dimension D of the (110) crystal plane of the positive electrode active material satisfies $500 \text{ Å} \leq D \leq 1000 \text{ Å}$.

In some embodiments, in the positive electrode active material, the splitting degree $\Delta\theta$ between the diffraction angle of the (110) crystal plane and that of (108) crystal plane of the positive electrode active material satisfies $0.3° \leq \Delta\theta \leq 0.8°$.

In some embodiments, the positive electrode active material includes a compound having a chemical formula of $Li_xNi_yCo_zMn_kM_pO_2$, where M includes at least one of B, Y, Nb, In, La, Zr, Ce, W, Al, Ti, Sr, Mg, Sb, V, Zn, Cu, Cr, and Fe, $0.8 \leq x \leq 1.2$, $0<y<1$, $0<z<1$, $0<k<1$, and $0\leq p\leq0.1$.

In some embodiments, the positive electrode active material includes a secondary particle, and the secondary particle includes a primary particle.

In some embodiments, a particle size ratio of the primary particle to the secondary particle is 1:(10-1000).

In the other aspect, the present disclosure relates to a secondary battery including a negative electrode active material and the positive electrode active material described herein.

In some embodiments, a leakage current I of the secondary battery is 0 A to 0.1 A at 60°C under a voltage of 4.5 V to 4.7 V.

In further aspect, the present disclosure relates to an electric device including the secondary battery described herein.

In some embodiments, the porosity P of the positive electrode active material, the crystal plane dimension D of the (110) crystal plane of the positive electrode active material, and the splitting degree between the diffraction angle of the (110) crystal plane and that of (108) crystal plane of the positive electrode active material in the present disclosure satisfy $300 \leq P*D/\Delta\theta \leq 1000$, ensuring that the lithium-ion battery prepared with this positive electrode active material has high pulse power while having significantly improved cycle performance.

**BRIEF DESCRIPTION OF DRAWINGS**

To describe the technical solutions of the present disclosure more clearly, the following briefly introduces the accompanying drawings required for describing the embodiments. Apparently, the accompanying drawings in the following description illustrate some embodiments of the present disclosure, and persons of ordinary skill in the art may still obtain other drawings from these accompanying drawings without creative effort.

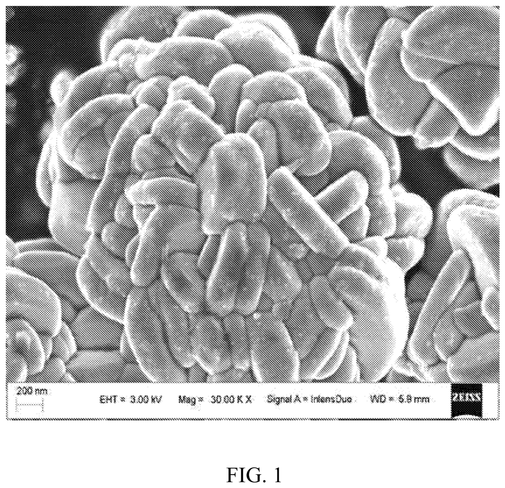

FIG. 1 shows an electron microscope image of the positive electrode active material prepared according to Example 1 of the present disclosure.

## DESCRIPTION OF EMBODIMENTS

The technical solutions in the embodiments will hereinafter be described in a clear and complete manner. It is obvious that the embodiments described below are only a part of the embodiments of the present disclosure, not all of them. Based on the embodiments disclosed in the disclosure, all other embodiments obtained by those skilled in the art without creative labor fall within the scope of protection of the present disclosure.

It should be understood that when used in this description and the appended claims, the terms "include" and "comprise" indicate the presence of the described features, entireties, steps, operations, elements, and/or components, but do not exclude the presence or addition of one or more other features, entireties, steps, operations, elements, components, and/or their combinations.

It should also be understood that the terminology used herein is intended solely for the purpose of describing specific embodiments and is not intended to limit the present disclosure. As used in the description and the appended claims of the present disclosure, unless the context clearly indicates otherwise, singular forms such as "an", "a," and "the" are intended to include plural forms.

An embodiment of the present disclosure provides a positive electrode active material satisfying the following relationship:

$300 \leq P*D/\Delta\theta \leq 800$; where P represents a porosity of the positive electrode active material, with a unit of %; D represents a crystal plane dimension of (110) crystal plane of the positive electrode active material, with a unit of Å; $\Delta\theta$ represents a splitting degree between a diffraction angle of the (110) crystal plane and that of (108) crystal plane of the positive electrode active material, with a unit of °.

In some embodiments, P*D/$\Delta\theta$ may be any one of 300, 320, 350, 380, 390, 400, 420, 450, 480, 500, 520, 540, 550, 570, 600, 650, 670, 690, 700, 720, 750, 780, or 800, or a range formed by any two thereof.

In some embodiments, the positive electrode active material satisfies $300 \leq P*D/\Delta\theta \leq 700$. In some embodiments, the positive electrode active material satisfies $325 \leq P*D/\Delta\theta \leq 600$. By controlling various process parameters during the preparation of the positive electrode active material, the porosity, crystal plane dimension, and crystallinity of the active material can be appropriately regulated to make the value of P*D/$\Delta\theta$ fall within the range of the disclosure, which is conductive to improving the structure stability of the positive electrode active material and wetting of electrolyte, thereby making the resulting battery have superior low-temperature power performance and better long-term life.

In some embodiments, the porosity P of the positive electrode active material satisfies $30\% \leq P \leq 65\%$. In some embodiments, P may be any one of 30%, 33%, 35%, 38%, 40%, 43%, 45%, 48%, 50%, 53%, 55%, 58%, 60%, or 65%, or a range formed by any two thereof. The porosity of the positive electrode active material within the range of the present disclosure can ensure sufficient wetting of electrolyte to facilitate capacity utilization and at the same time ensure structural stability during charge-discharge cycles, reduce side reaction, and extend battery life. In some embodiments, $32\% \leq P \leq 59\%$.

In some embodiments, $34\% \leq P \leq 57\%$.

In some embodiments, the crystal plane dimension D of the (110) crystal plane of the positive electrode active material satisfies $500 \text{ Å} \leq D \leq 1000 \text{ Å}$. In some embodiments, D can be any one of 500 Å, 520 Å, 540 Å, 550 Å, 570 Å, 600 Å, 650 Å, 670 Å, 690 Å, 700 Å, 720 Å, 750 Å, 780 Å, 800 Å, 830 Å, 850 Å, 890 Å, 900 Å, 950 Å, or 1000 Å, or a range formed by any two thereof. The crystal plane dimension D of the (110) crystal plane of the positive electrode active material within the range of the present disclosure facilitates rapid transport of lithium ions, thereby enhancing rate performance and power performance of the battery.

In some embodiments, $510 \text{ Å} \leq D \leq 840 \text{ Å}$.

In some embodiments, $500 \text{ Å} \leq D \leq 700 \text{ Å}$. When the crystal plane dimension D of the (110) crystal plane of the positive electrode active material falls within the above range, it enables the battery to have more superior overall performance.

In some embodiments, in the positive electrode active material, the splitting degree $\Delta\theta$ between the diffraction angle of the (110) crystal plane and that of (108) crystal plane of the positive electrode active material satisfies $0.3° \leq \Delta\theta \leq 0.8°$. In some embodiments, $\Delta\theta$ may be any one of 0.3°, 0.35°, 0.37°, 0.4°, 0.43°, 0.45°, 0.47°, 0.5°, 0.52°, 0.55°, 0.57°, 0.6°, 0.63°, 0.65°, 0.68°, 0.7°, 0.73°, 0.75°, 0.77°, or 0.8°, or a range formed by any two thereof. The splitting degree $\Delta\theta$ between the diffraction angle of the (110) crystal plane and that of (108) crystal plane being within the range of the present disclosure makes the positive electrode active material have better integrity of layered structure and more superior crystallization property, thereby enabling the battery to have better overall performance.

In some embodiments, $0.36° \leq \Delta\theta \leq 0.73°$.

In some embodiments, $0.38° \leq \Delta\theta \leq 0.71°$.

In some embodiments, $0.41° \leq \Delta\theta \leq 0.69°$. When $\Delta\theta$ is within the above ranges, the overall performance of the secondary battery can be further improved.

In some embodiments, the positive electrode active material includes a compound with the chemical formula of $Li_xNi_yCo_zMn_kM_pO_2$, where M includes at least one of B, Y, Nb, In, La, Zr, Ce, W, Al, Ti, Sr, Mg, Sb, V, Zn, Cu, Cr, and Fe, $0.8 \leq x \leq 1.2$, $0<y<1$, $0<z<1$, $0<k<1$, and $0\leq p\leq 0.1$.

In some embodiments, $0.3<y<0.95$.

In some embodiments, $0.45<y<0.90$.

In some embodiments, $0.45<y<0.85$.

In some embodiments, $0.45<y<0.75$.

In some embodiments, M includes B, and at least one of Y, Nb, In, La, Zr, Ce, W, Al, Ti, Sr, Mg, Sb, V, Zn, Cu, Cr, and Fe.

In some embodiments, M includes B and W, and at least one of Y, Nb, In, La, Zr, Ce, Al, Ti, Sr, Mg, Sb, V, Zn, Cu, Cr, and Fe.

In some embodiments, the positive electrode active material includes a secondary particle, and the secondary particle includes a primary particle. In some embodiments, the particle size ratio of the primary particle to the secondary particle is 1:(10-1000).

In some embodiments, the particle size ratio of the primary particle to the secondary particle is 1:(100-1000).

In some embodiments, the particle size ratio of the primary particle to the secondary particle may be 1:100, 1:200, 1:400, 1:600, 1:800, 1: 1000, or a range formed by any two thereof. When the primary particle and the secondary particle are within the above range, it is beneficial for shortening the transport pathway of lithium ions, thereby improving the power performance and cycle life of the battery.

In some embodiments, the surface of the positive electrode active material includes $Li_2CO_3$ and/or LiOH. Based on the mass of the positive electrode active material, the content of $Li_2CO_3$ ranges from 500 ppm to 1000 ppm, and the content of LiOH ranges from 1000 ppm to 3000 ppm. Residual lithium is subjected to decomposition and gas production during charge-discharge of battery, which impacts long-term performance and safety. The surface of the positive electrode active material proposed in the embodiments of the present disclosure has low residual lithium, thereby enabling lithium-ion batteries to exhibit excellent performance. In some embodiments, a method for preparing the positive electrode active material of the present disclosure is provided, including:

weighing nickel sulfate, cobalt sulfate, and manganese sulfate based on a specific element molar ratio of Ni:Co:Mn, and dissolving them in deionized water respectively; delivering each metal solution through pipelines to a reactor to form a mixed metal solution, with nitrogen gas being introduced as a protective atmosphere; adding into the mixed metal solution aqueous NaOH solution as a precipitating agent and ammonia water as a complexing agent; adjusting the ammonia water concentration and pH value of the solution in stages; and performing a reaction for 10 to 48 hours to obtain a precursor.

The precursor of positive electrode active material, lithium hydroxide, and doping raw material are mixed to obtain a first mixed material. The first mixed material is subjected to a first sintering process under an oxygen atmosphere to obtain an intermediate product, where the oxygen concentration of the oxygen atmosphere ranges from 30% to 60%.

In some embodiments, the molar ratio a/b of the precursor of positive electrode active material to lithium hydroxide is 1.03 to 1.09, where a is the molar content of lithium in the lithium hydroxide and b is the total molar content of Ni, Co, and Mn in the precursor of positive electrode active material. In some embodiments, a/b is 1.03.

In some embodiments, the metal oxide includes at least one of $CoO_2$, $MnO_2$, $Al_2O$, $B_2O_3$, $ZrO_2$, $SnO_2$, NbO, $TiO_2$, $V_2O_3$, $WO_2$ and $MoO_3$.

In some embodiments, mixing of the precursor of positive electrode active material, lithium hydroxide, and metal oxides may be performed in a high-speed mixer, and the mixing time may be set to 0.5 h to 2 h. In some embodiments, the mixing time is 1 h to 2 h.

In some embodiments, the first sintering may be performed in an atmosphere sintering furnace, the sintering atmosphere is an oxygen atmosphere, and the oxygen concentration of the oxygen atmosphere is 30% to 60%. In some embodiments, the oxygen concentration is 40% to 50%. In some embodiments, the parameters of the first sintering include a sintering temperature of 650°C to 950°C and a sintering time of 4 h to 24 h. In some embodiments, the sintering temperature may be 700°C to 900°C, and the sintering time may be 8 h to 12 h.

In some embodiments, the intermediate product is mixed with the metal oxide to obtain a second mixed material. The second mixed material is subjected to a second sintering to obtain the positive electrode active material.

In some embodiments, mixing of the intermediate product with the metal oxide may be performed in a high-speed mixer, and the mixing time may be set to 0.5 h to 2 h. In some embodiments, the mixing time is 1 h to 2 h.

In some embodiments, the second sintering may be performed in an atmosphere sintering furnace, and the sintering atmosphere is an air atmosphere. The parameters of the second sintering include: a sintering temperature of 200°C to 500°C and a sintering time of 6 h to 14 h. In some embodiments, the sintering temperature may be 300°C to 500°C, and the sintering time may be 7 h to 12 h.

In some embodiments, the control of the crystal plane dimension of the (110) crystal plane of the positive electrode active material, the splitting degree between the diffraction angle of the (110) crystal plane and that of (108) crystal plane of the positive electrode active material, and the porosity the positive electrode active material is influenced by the aforementioned preparation process. By adjusting the ammonia water concentration and pH value to regulate the structure of the precursor and the growth rate of crystal plane of the precursor, the precursors with different active crystal planes and loose degrees are obtained. And then, the positive electrode active material described in the present disclosure is obtained by adjusting the lithium ratio, temperature, and time of the sintering and so on. In the process described in the present disclosure, the preparation of the positive electrode active material is conductive to obtaining crystals with long-range order and uniformity, which facilitates the positive electrode active material to maintain structural integrity during long-term charging and discharging and enhances the cycling performance of the battery.

In the other aspect, the present disclosure provides a secondary battery including a negative electrode active material and the positive electrode active material described in the present disclosure.

In some embodiments, the leakage current I of the secondary battery is 0 A to 0.1 A at 60°C under a voltage of 4.5 V to 4.7 V. The secondary battery of the present disclosure has the leakage current being within a narrow range, and has superior cycling performance.

In some embodiments, after charging the secondary battery at a constant current to a predetermined set voltage, the secondary battery is charged at constant-voltage with the set voltage for a preset time. In some embodiments, the set voltage is 4.5V to 4.7V, and the preset time is 15 V to 25 h.

In some embodiments, whether the cycling performance is good or not can be determined from the magnitude of the leakage current of the secondary battery. In some embodiments, multiple levels of leakage current ranges may be set, and the quality of cycling performance of the secondary battery can be determined based on the leakage current within each range.

In another further aspect, the present disclosure provides an electric device including the secondary battery described in the present disclosure.

Examples

Example 1

Step 1: a precursor of positive electrode active material $M(OH)_2$, LiOH, and $ZrO_2$ are add in a molar ratio of 1:1.09:0.002 into a high-speed mixer and mixed for 1 hour to obtain a first mixed material. The first mixed material is placed into an atmosphere sintering furnace for first sintering to obtain an intermediate product. The parameters of the first sintering include: sintering temperature of 880°C, sintering time of 8 h, and sintering atmosphere being an oxygen atmosphere with $O_2$ concentration of 50%.

The chemical formula of the positive electrode active material precursor is $[Ni_{0.5}Co_{0.2}Mn_{0.3}](OH)_2$. The positive electrode active material precursor is prepared via the coprecipitation method. The positive electrode active material precursor has a loose porous structure. The molar ratio a/b of lithium hydroxide to the positive electrode active material precursor is 1.09, where a is the molar content of lithium in lithium hydroxide, and b is the total molar content of Ni, Co, and Mn in the positive electrode active material precursor. The molar content of nickel in lithium nickel manganese cobalt oxide is 50% of the total molar content of nickel, cobalt, and manganese.

Step 2: the intermediate product of Step 1 and $B_2O_3$ are added in a molar ratio of 1:0.001 into a high-speed mixer and mixed for 1 hour to obtain a second mixed material. The second mixed material is placed into an atmosphere sintering furnace for a second sintering to obtain the positive electrode active material. The parameters of the second sintering include: sintering temperature of 300°C, sintering time of 8 h, and sintering atmosphere being air atmosphere.

Preparation of lithium-ion battery

(1) Preparation of positive electrode plate: the positive electrode active material, acetylene black, and polyvinylidene fluoride are dispersed in N-methylpyrrolidone (NMP) at a mass ratio of 92:6:2. The resulting slurry is coated onto 12 μm aluminum foil, dried in a 120°C oven, and then cold-pressed and slit to obtain the positive electrode plate.

(2) Preparation of electrolyte: ethylene carbonate (EC), ethyl methyl carbonate (EMC), and diethyl carbonate (DEC) are mixed in a volume ratio of 20:20:60 to obtain a mixed solution. In a glove box under argon atmosphere with moisture content<10 ppm, fully dried $LiPF_6$ with a concentration of 1 mol/L is dissolved in the organic solvent and mixed uniformly to obtain the electrolyte.

(3) Preparation of negative electrode plate: graphite, sodium carboxymethyl cellulose, styrenebutadiene rubber, and acetylene black are mixed at a mass ratio of 95:1:2:2; deionized water is added; and a slurry of negative electrode is obtained under the action of a vacuum mixer. The slurry of negative electrode is uniformly coated onto a copper foil with a thickness of 8 $\mu$m, dried in an oven at 120°C, then cold-pressed and slit to obtain the negative electrode plate. (4) Preparation of a lithium-ion battery: the positive electrode plate, the separator, and the negative electrode plate are stacked in sequence, the separator being positioned between the positive and negative electrode plates for insulation, and wound into a square bare core; the bare core is put into an aluminum-plastic film, baked at 80°C to remove moisture, subjected to electrolyte injection and sealed, followed by standing, cold and hot pressing, formation, clamping and capacity grading and other process, obtaining the lithium-ion battery.

The preparation methods of the remaining examples and comparative examples refer to Example 1, with the differences being shown in Table 1.

Table 1

| Number | Temperature (°C) and time (h) of the first sintering | Temperature (°C) and time (h) of the second sintering | Type of metal oxides of the first and second sintering | Molar ratio of M(OH)$_2$, LiOH and the metal oxide of the first sintering | Molar ratio of the intermediate product of Step 1 to the metal oxide of the second sintering |
|---|---|---|---|---|---|
| Example 1 | 880; 8 | 300; 8 | ZrO$_2$; B$_2$O$_3$ | 1:1.09:0.002 | 1:0.001 |
| Example 2 | 700; 8 | 300; 8 | ZrO$_2$; B$_2$O$_3$ | 1:1.09:0.002 | 1:0.001 |
| Example 3 | 750; 8 | 300; 8 | ZrO$_2$; B$_2$O$_3$ | 1:1.09:0.002 | 1:0.001 |
| Example 4 | 1000; 8 | 300; 8 | ZrO$_2$; B$_2$O$_3$ | 1:1.09:0.002 | 1:0.001 |
| Example 5 | 880; 4 | 300; 8 | ZrO$_2$; B$_2$O$_3$ | 1:1.09:0.002 | 1:0.001 |
| Example 6 | 880; 12 | 300; 8 | ZrO$_2$; B$_2$O$_3$ | 1:1.09:0.002 | 1:0.001 |
| Example 7 | 880; 24 | 300; 8 | ZrO$_2$; B$_2$O$_3$ | 1:1.09:0.002 | 1:0.001 |
| Example 8 | 880; 8 | 500; 8 | ZrO$_2$; B$_2$O$_3$ | 1:1.09:0.002 | 1:0.001 |
| Example 9 | 880; 8 | 500; 8 | ZrO$_2$; TiO$_2$ | 1:1.09:0.002 | 1:0.001 |
| Example 10 | 880; 8 | 500; 8 | ZrO$_2$; WO$_3$ | 1:1.09:0.002 | 1:0.001 |
| Example 11 | 880; 8 | 300; 8 | MgO; B$_2$O$_3$ | 1:1.09:0.002 | 1:0.001 |
| Example 12 | 880; 8 | 300; 8 | Al$_2$O$_3$; B$_2$O$_3$ | 1:1.09:0.002 | 1:0.001 |
| Example 13 | 880; 8 | 300; 8 | WO$_3$; B$_2$O$_3$ | 1:1.09:0.002 | 1:0.001 |
| Example 14 | 880; 8 | 300; 8 | Al$_2$O$_3$+WO$_3$; B$_2$O$_3$ | 1:1.09:0.002 | 1:0.001 |
| Example 15 | 880; 8 | 300; 8 | ZrO$_2$+WO$_3$; B$_2$O$_3$ | 1:1.09:0.002 | 1:0.001 |
| Example 16 | 880; 8 | 300; 8 | TiO$_2$+WO$_3$; B$_2$O$_3$ | 1:1.09:0.002 | 1:0.001 |
| Example 17 | 880; 8 | 300; 8 | ZrO$_2$; B$_2$O$_3$ | 1:1.09:0.008 | 1:0.001 |
| Example 18 | 880; 8 | 300; 8 | ZrO$_2$; B$_2$O$_3$ | 1:1.09:0.009 | 1:0.001 |
| Example 19 | 880; 8 | 300; 8 | ZrO$_2$; B$_2$O$_3$ | 1:1.09:0.005 | 1:0.001 |
| Example 20 | 880; 8 | 300; 8 | ZrO$_2$; B$_2$O$_3$ | 1:1.09:0.002 | 1:0.005 |
| Example 21 | 880; 8 | 300; 8 | ZrO$_2$; B$_2$O$_3$ | 1:1.09:0.002 | 1:0.006 |
| Example 22 | 550; 8 | 300; 8 | ZrO$_2$; B$_2$O$_3$ | 1:1.09:0.002 | 1:0.001 |
| Comparative Example 1 | 400; 8 | 300; 8 | ZrO$_2$; B$_2$O$_3$ | 1:1.09:0.002 | 1:0.001 |
| Comparative Example 2 | 500; 8 | 300; 8 | ZrO$_2$; B$_2$O$_3$ | 1:1.09:0.002 | 1:0.001 |

Introduction of Test Method

1. Splitting degree of the (110) and (108) crystal planes

A certain mass of positive electrode active material powder is placed in an X-ray powder diffractometer. The $2\theta$ angles corresponding to the diffraction peaks of the (110) and (108) crystal planes are obtained via X-ray diffraction analysis, thereby obtaining the splitting degree of the (110) and (108) crystal planes.

2. Dimension of the (110) crystal plane

A certain mass of positive electrode active material powder is placed in an X-ray powder diffractometer. The dimension of the (110) crystal plane is obtained via X-ray diffraction analysis.

3. Porosity

The porosity of positive electrode active material can be tested by mercury porosimetry, as detailed in GB/T 21650.1-2008, "Determination of pore size distribution and porosity of solid materials by mercury porosimetry and gas adsorption".

4. Power

The battery is charged at 1C constant current and constant voltage to 100% SOC. After standing for 10 minutes, the battery is discharged at 1C constant current for 30 minutes to adjust to 50% SOC. After standing in -20°C environment for 180 minutes, the battery is discharged at 5C for 30 seconds. The voltage value before and after discharging is recorded, and the discharge power is calculated.

5. Test method of leakage current

Lithium-ion batteries are prepared from the positive electrode active materials based on Examples and Comparative Examples.

The test method of leakage current includes: charging the lithium-ion battery to 4.7V at a constant current, then performing constant-voltage charging on the lithium-ion battery at 4.7V for 20 h, and obtaining the leakage current of lithium ions during 20-hour constant-voltage charging.

6. Test of cyclic performance

First, the battery voltage is calibrated to determine the voltages corresponding to 25%SOC and 85%SOC. The battery is placed in a 25°C constant-temperature chamber for charge-discharge cycles, with the charge and discharge being conducted at 5C constant current. The battery's cycle capacity and number of cycles are recorded. The capacity retention rate after 5000 cycles is obtained.

Test results of Examples and Comparative Examples are shown in Table 2 below.

Table 2. Table of test results

| Number | Splitting degree of the (110) and (108) crystal planes (°) | Dimension of the (110) crystal plane (Å) | Porosity P (%) | P*D/Δθ | Power W | Leakage current (A) | Capacity retention rate after 5000 cycles (%) |
|---|---|---|---|---|---|---|---|
| Example 1 | 0.62 | 527 | 0.63 | 535.50 | 90 | 0.05 | 89.9 |
| Example 2 | 0.52 | 575 | 0.72 | 796.15 | 85 | 0.13 | 73.8 |
| Example 3 | 0.58 | 567 | 0.68 | 664.76 | 84 | 0.11 | 76.2 |
| Example 4 | 0.68 | 480 | 0.5 | 352.94 | 67 | 0.08 | 84.6 |
| Example 5 | 0.51 | 554 | 0.65 | 706.08 | 83 | 0.08 | 82.6 |
| Example 6 | 0.64 | 504 | 0.57 | 448.88 | 77 | 0.07 | 83.3 |
| Example 7 | 0.67 | 436 | 0.52 | 338.39 | 65 | 0.06 | 86.2 |

(continued)

| Number | Splitting degree of the (110) and (108) crystal planes (°) | Dimension of the (110) crystal plane (Å) | Porosity P (%) | P*D/Δθ | Power W | Leakage current (A) | Capacity retention rate after 5000 cycles (%) |
|---|---|---|---|---|---|---|---|
| Example 8 | 0.62 | 539 | 0.61 | 530.31 | 91 | 0.04 | 90.1 |
| Example 9 | 0.61 | 524 | 0.62 | 532.59 | 89 | 0.05 | 88.4 |
| Example 10 | 0.63 | 530 | 0.64 | 538.41 | 92 | 0.06 | 89.3 |
| Example 11 | 0.62 | 518 | 0.62 | 518.00 | 89 | 0.06 | 83.3 |
| Example 12 | 0.63 | 532 | 0.63 | 532.00 | 97 | 0.03 | 91.2 |
| Example 13 | 0.65 | 578 | 0.64 | 569.11 | 98 | 0.02 | 92.4 |
| Example 14 | 0.64 | 589 | 0.62 | 570.59 | 96 | 0.03 | 91.5 |
| Example 15 | 0.65 | 605 | 0.63 | 586.38 | 99 | 0.02 | 92.9 |
| Example 16 | 0.64 | 606 | 0.62 | 587.06 | 98 | 0.03 | 93.1 |
| Example 17 | 0.3 | 570 | 0.42 | 798 | 82 | 0.14 | 72.3 |
| Example 18 | 0.4 | 550 | 0.5 | 693.75 | 83 | 0.12 | 71.4 |
| Example 19 | 0.8 | 603 | 0.47 | 354.26 | 65 | 0.9 | 82.5 |
| Example 20 | 0.45 | 700 | 0.35 | 544.44 | 87 | 0.7 | 87.4 |
| Example 21 | 0.42 | 800 | 0.32 | 609.52 | 85 | 0.6 | 86.5 |
| Example 22 | 0.43 | 420 | 0.31 | 302.8 | 61 | 0.15 | 70.2 |
| Comparative Example 1 | 0.22 | 207 | 0.27 | 254.05 | 56 | 0.21 | 77.2 |
| Comparative Example2 | 0.28 | 236 | 0.31 | 261.29 | 52 | 0.19 | 78.5 |

Analysis of experiment results

From the comparison between Examples 1 to 16 and Comparative Examples 1 to 2, it can be seen that when $300 \leq P*D/\Delta\theta \leq 800$ falls within the range of the present disclosure, both the power and cyclic performance of the battery are improved, and the leakage current of the battery is reduced.

A comparison between Examples 1 to 7 and Comparative Examples 1 to 2 is conducted to analyze the effects of different sintering temperature and time process parameters on the material. Excessively high temperature and too long time result in high material crystallinity and large degree of separation, decrease of the (110) crystal plane and porosity, and decline of power performance; while excessively low temperature causes unsuccessful synthesis of material and poor performance.

In the above Examples, the description of each Example emphasizes specific aspects. Details omitted in certain Example can be referred to the relevant descriptions in other Examples.

Throughout the description of this specification, reference to the terms such as "an embodiment", "some embodiments", "example", "specific example", or "some examples" indicates that the specific features, structures, materials, or characteristics described in connection with that embodiment or example are included in at least one embodiment or example of the present disclosure. In this specification, the illustrative use of above terms should not be construed as necessarily referring to the same embodiment or example. Moreover, the specific features, structures, materials, or characteristics described may be appropriately combined in any one or more embodiments or examples. Additionally, those skilled in the art may combine and integrate different embodiments or examples described in this specification. It will be apparent that those skilled in the art can make various modifications and variations to the present disclosure without departing from the spirit and scope thereof. Thus, such modifications and variations of the present disclosure fall within the scope of the claims of the present disclosure and their equivalents, and the present disclosure is also intended to encompass these modifications and variations.

The foregoing describes specific embodiments of the present disclosure, but the scope of protection of the present disclosure is not limited thereto. Any person skilled in the art may readily conceive of various equivalent modifications or substitutions within the technical scope disclosed by the present disclosure, and such modifications or substitutions should be encompassed within the scope of protection of the present disclosure. Therefore, the scope of protection of the present disclosure shall be determined by the scope of the claims.

**Claims**

1. A positive electrode active material, satisfying the following relationship:

$$300 \leq P*D/\Delta\theta \leq 800;$$

wherein P represents a porosity of the positive electrode active material, with a unit of %; D represents a crystal plane dimension of (110) crystal plane of the positive electrode active material, with a unit of Å; $\Delta\theta$ represents a splitting degree between a diffraction angle of the (110) crystal plane and that of (108) crystal plane of the positive electrode active material, with a unit of °.

2. The positive electrode active material according to claim 1, wherein the porosity P of the positive electrode active material satisfies $30\% \leq P \leq 65\%$.

3. The positive electrode active material according to claim 1 or 2, wherein the crystal plane dimension D of the (110) crystal plane of the positive electrode active material satisfies

$$500 \text{ Å} \leq D \leq 1000 \text{ Å}.$$

4. The positive electrode active material according to any one of claims 1 to 3, wherein in the positive electrode active material, the splitting degree $\Delta\theta$ between the diffraction angle of the (110) crystal plane and that of (108) crystal plane of the positive electrode active material satisfies $0.3° \leq \Delta\theta \leq 0.8°$.

5. The positive electrode active material according to any one of claims 1 to 4, wherein the positive electrode active material comprises a compound having a chemical formula of $Li_xNi_yCo_zMn_kM_pO_2$, and wherein M comprises at least one of B, Y, Nb, In, La, Zr, Ce, W, Al, Ti, Sr, Mg, Sb, V, Zn, Cu, Cr, and Fe, $0.8 \leq x \leq 1.2$, $0 < y < 1$, $0 < z < 1$, $0 < k < 1$, $0 \leq p \leq 0.1$.

6. The positive electrode active material according to any one of claims 1 to 5, wherein the positive electrode active material comprises a secondary particle, and the secondary particle comprises a primary particle.

7. The positive electrode active material according to claim 6, wherein a particle size ratio of the primary particle to the secondary particle is 1:(10-1000).

8. A secondary battery, comprising a negative electrode active material and a positive electrode active material according to any one of claims 1 to 7.

9. The secondary battery according to claim 8, wherein a leakage current I of the secondary battery is 0 A to 0.1 A at 60°C under a voltage of 4.5 V to 4.7 V.

10. An electric device, comprising the secondary battery according to claim 8 or 9.

FIG. 1

## INTERNATIONAL SEARCH REPORT

| International application No. |
| --- |
| **PCT/CN2023/141005** |

| A. | CLASSIFICATION OF SUBJECT MATTER |
| --- | --- |

C01G 53/00(2006.01)i; H01M 4/525(2010.01)i; H01M 4/505(2010.01)i; H01M 4/485(2010.01)i; H01M 10/0525(2010.01)i

According to International Patent Classification (IPC) or to both national classification and IPC

| B. | FIELDS SEARCHED |
| --- | --- |

Minimum documentation searched (classification system followed by classification symbols)

C01G 53/-, H01M 4/-, H01M 10/-

Documentation searched other than minimum documentation to the extent that such documents are included in the fields searched

Electronic data base consulted during the international search (name of data base and, where practicable, search terms used)

CNABS, CNTXT, CNKI, VEN, WEB OF SCIENCE: 二次颗粒, 孔隙率, 镍, Ni, 钴, Co, 锰, Mn, 镍钴锰, 劈裂, 劈裂程度, 煅烧, 烧结, 二次煅烧, 二次烧结, 氧气含量, 氧气浓度, secondary particle, porosity, nickel, cobalt, manganese, NCM, split+, splitting degree, calcin+, sinter, secondary, oxygen content, oxygen concentration, theta

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116443952 A (SUNWODA ELECTRIC VEHICLE BATTERY CO., LTD.) 18 July 2023 (2023-07-18)<br>claims 1-10 | 1-10 |
| X | CN 115548329 A (SUNWODA ELECTRIC VEHICLE BATTERY CO., LTD.) 30 December 2022 (2022-12-30)<br>description, paragraphs [0006]-[0012], [0022], [0075]-[0089], and [0106]-[0107] | 1-10 |
| A | CN 103606667 A (ZHEJIANG NARADA POWER SOURCE CO., LTD. et al.) 26 February 2014 (2014-02-26)<br>entire document | 1-10 |
| A | CN 107123799 A (GEM (WUXI) ENERGY MATERIALS CO., LTD.) 01 September 2017 (2017-09-01)<br>entire document | 1-10 |
| A | CN 103259007 A (HENAN KELONG NEW ENERGY CO., LTD.) 21 August 2013 (2013-08-21)<br>entire document | 1-10 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 March 2024** | **23 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 696 656 A1**

**INTERNATIONAL SEARCH REPORT**

| International application No. |
| --- |
| **PCT/CN2023/141005** |

**C.    DOCUMENTS CONSIDERED TO BE RELEVANT**

| Category* | Citation of document, with indication, where appropriate, of the relevant passages | Relevant to claim No. |
| --- | --- | --- |
| A | EP 3996171 A1 (BASF SHANSHAN BATTERY MATERIALS (NINGXIANG) CO., LTD.) 11 May 2022 (2022-05-11) <br> entire document | 1-10 |
| A | US 2022416236 A1 (BASF SHANSHAN BATTERY MATERIALS (NINGXIANG) CO., LTD.) 29 December 2022 (2022-12-29) <br> entire document | 1-10 |

Form PCT/ISA/210 (second sheet) (July 2022)

12

**INTERNATIONAL SEARCH REPORT**
Information on patent family members

International application No.

**PCT/CN2023/141005**

| Patent document cited in search report | | | Publication date (day/month/year) | Patent family member(s) | | | Publication date (day/month/year) |
|---|---|---|---|---|---|---|---|
| CN | 116443952 | A | 18 July 2023 | None | | | |
| CN | 115548329 | A | 30 December 2022 | None | | | |
| CN | 103606667 | A | 26 February 2014 | None | | | |
| CN | 107123799 | A | 01 September 2017 | None | | | |
| CN | 103259007 | A | 21 August 2013 | None | | | |
| EP | 3996171 | A1 | 11 May 2022 | KR | 20220019046 | A | 15 February 2022 |
| | | | | US | 2022416236 | A1 | 29 December 2022 |
| | | | | WO | 2021000868 | A1 | 07 January 2021 |
| | | | | JP | 2022542774 | A | 07 October 2022 |
| | | | | JP | 7318020 | B2 | 31 July 2023 |
| | | | | EP | 3996171 | A4 | 24 August 2022 |
| US | 2022416236 | A1 | 29 December 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202310567615 A